(19) Europäisches Patentamt / European Patent Office / Office européen des brevets

(11) **EP 3 501 640 B1**

(12) **EUROPEAN PATENT SPECIFICATION**

(45) Date of publication and mention of the grant of the patent:
**19.04.2023   Bulletin 2023/16**

(21) Application number: **18202985.0**

(22) Date of filing: **26.10.2018**

(51) International Patent Classification (IPC):
**B01J 27/185** (2006.01)    **B01J 27/187** (2006.01)
**B01J 27/182** (2006.01)    **B01J 27/043** (2006.01)
**B01J 23/889** (2006.01)    **B01J 37/28** (2006.01)
**B01J 37/02** (2006.01)     **B01J 37/08** (2006.01)
**C10J 3/02** (2006.01)      **B01J 35/10** (2006.01)

(52) Cooperative Patent Classification (CPC):
(C-Sets available)
**B01J 27/1853; B01J 23/002; B01J 23/8892;**
**B01J 27/043; B01J 27/182; B01J 27/187;**
**B01J 35/1014; B01J 37/0209; B01J 37/08;**
**B01J 37/28; C10J 3/10; C10J 3/36; C10L 3/08;**
B01J 2523/00; C10J 2300/092;          (Cont.)

(54) **CATALYST, METHOD FOR PREPARING THE SAME, AND METHOD FOR PREPARING SYNGAS**

KATALYSATOR, VERFAHREN ZUR DESSEN HERSTELLUNG UND VERFAHREN ZUR HERSTELLUNG VON SYNTHESEGAS

CATALYSEUR, SON PROCÉDÉ DE PRÉPARATION ET PROCÉDÉ DE PRÉPARATION D'UN GAZ DE SYNTHÈSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **20.12.2017   TW 106144822**

(43) Date of publication of application:
**26.06.2019   Bulletin 2019/26**

(73) Proprietor: **Industrial Technology Research Institute**
**31040 Hsinchu (TW)**

(72) Inventors:
 • **KUO, Yen-Ting**
  **116 Taipei City (TW)**
 • **WAN, Hou-Peng**
  **333 Taoyuan City (TW)**
 • **CHEN, Ju-Shiou**
  **234 New Taipei City (TW)**
 • **JUCH, Ching-I**
  **310 Hsinchu County (TW)**
 • **HUNG, Wei-Chun**
  **238 New Taipei City (TW)**
 • **LIN, Uei-Ting**
  **220 New Taipei City (TW)**

(74) Representative: **Michalski Hüttermann & Partner Patentanwälte mbB**
**Kaistraße 16A**
**40221 Düsseldorf (DE)**

(56) References cited:
 • **SUN YONGQI ET AL: "Integrated carbon dioxide/sludge gasification using waste heat from hot slags: Syngas production and sulfur dioxide fixation", BIORESOURCE TECHNOLOGY, ELSEVIER, AMSTERDAM, NL, vol. 181, 22 January 2015 (2015-01-22), pages 174-182, XP029200122, ISSN: 0960-8524, DOI: 10.1016/J.BIORTECH.2015.01.061**
 • **PURWANTO H ET AL: "Hydrogen production from biogas using hot slag", INTERNATIONAL JOURNAL OF HYDROGEN ENERGY, ELSEVIER SCIENCE PUBLISHERS B.V., BARKING, GB, vol. 31, no. 4, 1 March 2006 (2006-03-01), pages 491-495, XP024899835, ISSN: 0360-3199, DOI: 10.1016/J.IJHYDENE.2005.04.021 [retrieved on 2006-03-01]**

• **YONGQI SUN ET AL: "Achieving waste to energy through sewage sludge gasification using hot slags: syngas production", NATURE SCIENTIFIC REPORTS, vol. 5, no. 1, 15 June 2015 (2015-06-15), pages 1-12, XP055587646, DOI: 10.1038/srep11436**

(52) Cooperative Patent Classification (CPC): (Cont.)
C10J 2300/0986; C10J 2300/123; C10L 2290/141;
Y02P 20/52

C-Sets
B01J 2523/00, B01J 2523/13, B01J 2523/22,
B01J 2523/23, B01J 2523/31, B01J 2523/41,
B01J 2523/47, B01J 2523/51, B01J 2523/72,
B01J 2523/842;
B01J 2523/00, B01J 2523/22, B01J 2523/23,
B01J 2523/31, B01J 2523/41, B01J 2523/51,
B01J 2523/72, B01J 2523/842

**Description**

**TECHNICAL FIELD**

The technical field relates to a catalyst, a method for preparing the same, and a method for preparing a syngas.

**BACKGROUND**

With rapid economic development, mankind is facing critical problems, including the depletion of petrochemical resources and pollution caused by non-renewable energy resources such as gasoline and coal. It is imperative to find other sources of energy that have the advantages of high energy density, environmental friendliness, and sustainable development. The generation of syngas from biomass gasification is of increasing interest with regard to the demands of alternative energy.

However, in the conventional process for fabricating syngas from biomass via a fluidized bed reactor, a large amount of byproduct (such as char, tar, and ash) is also obtained, resulting in a reduction of the efficiency of gasification. The presence of byproduct in syngas poses major technical obstacles in the gasification process as it may cause fouling and the plugging of downstream processes and equipment. Condensing tar can dramatically foul gas cleaning equipment, and liquid tar droplets that enter prime movers hamper the operation of these end-use applications of the syngas. If tar and condensed water are mixed, e.g., in conventional water-based gas cleaning systems, it may create a water treatment problem that is often costly and difficult to solve.

SUN YONGQI et al, "Integrated carbon dioxide/sludge gasification using waste heat from slags: Syngas production and sulfur dioxide fixation", Bioresource Technology, Elsevier, Amsterdam, NL, vol. 181, 22 January 2015, pages 174-182, describes that the integrated $CO_2$/sludge gasification using the waste heat in hot slags was explored with the aim of syngas production, waste heat recovery and sewage sludge disposal. The results are described to demonstrate that hot slags presented multiple roles on sludge gasification, i.e. not only a good heat carrier but also an effective desulfurizer

PURWANTO H et al, "Hydrogen production from biogas using hot slag", International Journal of Hydrogen Energy, Elsevier Science Publishers B.V. Barking, GB, vol. 31, no. 4, 1 March 2006, pages 491-495, describes studies of the possibility of using hot slag for the hydrogen production from biogas. In more detail, this document deals with generating hydrogen from methane using heated slag particles as catalyst.

Therefore, the industry needs a novel catalyst to serve as the material for a fluidized bed and to inhibit the formation of the byproduct and enhance gasification efficiency.

**SUMMARY**

The invention provides a catalyst according to claim 1, wherein the catalyst meets one of the following two conditions (1) and (2):

(1) 4wt%-6wt% of Si, 5wt.%-10wt.% of P, 25wt.%-35wt.% of Ca, 8wt.%-21wt.% of Fe, 36wt.%-41wt.% of O, and 0.1wt.%-5wt.% of Mg, Al, Mn, or a combination thereof, based on the weight of the catalyst; and
(2) 3wt%-6wt.% of Al, 6wt.%-8wt.% of Si, 12wt.%-16wt.% of P, 28wt.%-32wt.% of Ca, 38wt.%-50wt.% of O, and 0.1wt.%-3wt.% of Mg, S, K, Ti, Mn, Fe, or a combination thereof, based on the weight of the catalyst.

The invention provides a method according to claim 5 for preparing the aforementioned catalyst. The method includes immersing an industrial byproduct into a solution to obtain a mixture, wherein the solution includes a phosphorus-containing compound dissolved in a solvent, and wherein the phosphorus-containing compound includes phosphorus-containing inorganic acid. Next, the mixture is dried to remove the solvent, obtaining a solid. The solid is subjected to an annealing process to obtain the catalyst of the disclosure.

The invention also provides a method according to claim 13 for preparing the syngas. The method includes disposing the catalyst into a reactor. Next, a carbon source is introduced into the reactor. A heating process is performed to convert the carbon source into a syngas by means of the catalyst.

A detailed description is given in the following embodiments with reference to the accompanying drawings.

Detailed Description

The invention provides a catalyst and a method for preparing the same, and a method for preparing a syngas. According to embodiments of the invention, the catalyst, for example, can be a silicon-phosphorus-calcium-containing composite oxide. Since the catalyst of the invention includes specific elements and amounts of the elements, the catalyst, serving as a material of fluidized bed disposed in the reactor, can inhibit the formation of the byproduct (such as tar) and enhance the conversion efficiency of hydrocarbon. In addition, the catalyst of the disclosure can be prepared from easily available and cheap industrial byproduct. Therefore, the cost for manufacturing syngas can be reduced.

According to the invention, the catalyst meets one of the following two conditions (1) and (2):

(1) 4wt%-6wt% of Si, 5wt.%-10wt.% of P, 25wt.%-35wt.% of Ca, 8wt.%-21wt.% of Fe, 36wt.%-41wt.% of O, and 0.1wt.%-5wt.% of Mg, Al, Mn, or a combination thereof, based on the weight of the catalyst; and (2) 3wt%-6wt.% of Al, 6wt.%-8wt.% of Si, 12wt.%-16wt.% of P, 28wt.%-32wt.% of Ca, 38wt.%-50wt.% of O, and 0.1wt.%-3wt.% of Mg, S, K, Ti, Mn, Fe, or a combination thereof, based on the weight of the catalyst.

According to embodiments of the disclosure, the elements (such as silicon, phosphorous, calcium, iron, aluminum, magnesium, potassium, titanium, and/or manganese) in the catalyst are present mainly in the form of oxide (such as silicon oxide, phosphorus pentoxide, calcium oxide, iron oxide, aluminum oxide, magnesium oxide, potassium oxide, titanium oxide, and/or manganese oxide). Therefore, the catalyst of the disclosure can be a composite oxide. According to embodiments of the invention when the catalyst of the invention includes sulfur, the metal element of the catalyst can be present in the form of sulfide.

According to embodiments of the invention when the catalyst of the disclosure meets condition (1), the ratio (W1/W2) of the weight of phosphorous (W1) to the total weight of silicon, calcium, and iron (W2) is from about 0.1 to 0.2 (such as 0.11, 0.12, 0.13, 0.14, 0.15, 0.16, 0.17, 0.18, or 0.19), and/or the ratio (W1/W3) of the weight of phosphorous (W1) to the weight of oxygen (W3) is from about 0.1 to 0.27 (such as 0.11, 0.12, 0.13, 0.14, 0.15, 0.16, 0.17, 0.18, 0.19, 0.20, 0.21, 0.22, 0.23, 0.24, 0.25, or 0.26). When the ratio (W1/W2 or W1/W3) is too low, the electrons and holes of the catalyst are not apt to be spaced apart from each other to create an electric dipole moment. As a result, the gasification conversion efficiency of the catalyst is reduced. Conversely, when the ratio (W1/W2 or W1/W3) is too high, the electrons and holes of the catalyst are apt to be recombined due to the narrow depletion region on the catalyst surface. As a result, the gasification conversion efficiency of the catalyst is reduced.

According to embodiments of the invention when the catalyst of the disclosure meets condition (2), the ratio (W1/W2) of the weight of P (W1) to the total weight of Si, Ca, and Fe (W2) is from about 0.3 to 0.4 (such as 0.31, 0.32, 0.33, 0.34, 0.35, 0.36, 0.37, 0.38, or 0.39), and/or the ratio (W1/W3) of the weight of P (W1) to the weight of O (W3) is from about 0.3 to 0.4 (such as 0.31, 0.32, 0.33, 0.34, 0.35, 0.36, 0.37, 0.38, or 0.39). When the ratio (W1/W2 or W1/W3) is too low, the electrons and holes of the catalyst are not apt to be spaced apart from each other to create an electric dipole moment, resulting in an inability to stabilize the free radical intermediate product during gasification. As a result, the gasification conversion efficiency of the catalyst is reduced. Conversely, when the ratio (W1/W2 or W1/W3) is too high, the electrons and holes of the catalyst are apt to be recombined due to the narrow depletion region on the catalyst surface, and as a result, the electric dipole moment cannot be created and the free radical intermediate product cannot be stabilized during gasification. As a result, the gasification conversion efficiency of the catalyst is reduced.

According to embodiments of the invention the catalyst of the disclosure can have a specific surface area from about 10 $m^2/g$ to 100 $m^2/g$ (such as 20 $m^2/g$, 30 $m^2/g$, 40 $m^2/g$, 50 $m^2/g$, 60 $m^2/g$, 70 $m^2/g$, 80 $m^2/g$, or 90 $m^2/g$).

The invention provides a method for preparing the catalyst. The catalyst can be prepared from subjecting easily available and cheap industrial byproducts (including elements such as iron, calcium, magnesium, silicon, and/or aluminum), modified by a phosphorous-containing solution, to an annealing process. According to the invention, the method for preparing the catalyst includes the following steps. First, an industrial byproduct is immersed into a solution to obtain a mixture, wherein the solution includes a phosphorus-containing compound dissolved in a solvent. The phosphorus-containing compound is phosphorus-containing inorganic acid. Next, the mixture is dried to remove solvent, obtaining a solid. Next, the solid is subjected to an annealing process, obtaining the catalyst of the disclosure.

It should be noted that, when replacing the phosphorus-containing compound with hydrochloric acid or sulfuric acid to modify the industrial byproduct, the syngas, prepared in the presence of the obtained catalyst, would include chloride-containing compound or sulfur-containing compound, resulting in air pollution. In addition, when replacing the phosphorus-containing compound with organic acid (such as formic acid, or acetic acid) to modify the industrial byproduct, the gasification conversion efficiency of the obtained catalyst cannot be effectively improved.

According to some embodiments of the invention, after immersing the industrial byproduct into the solution to obtain the mixture, the mixture can be divided into a first fraction (such a fraction with relatively low density) and a second fraction (such a fraction with relatively high density) through filtration, decantation, or magnetic sorting. The first fraction or the second fraction is then dried to remove the solvent, obtaining the solid. According to embodiments of the invention, the catalyst, prepared by subjecting the fraction with relatively high density of the mixture after drying to an annealing process, has a relatively large amount of iron and manganese.

According to embodiments of the invention, the industrial byproduct can be steel slag. In addition, according to embodiments of the invention, the industrial byproduct is free of nickel, and/or chromium. As a result, the obtained catalyst does not include nickel and/or chromium, thereby avoiding the generation of hazardous waste. Herein, the phrase "the industrial byproduct does not includes nickel (or chromium)" means that the amount of nickel (or chromium) in the catalyst is zero or not more than 0.01wt.%, based on the weight of the industrial byproduct.

The industrial byproduct meets one of the following two conditions (1) and (2):

(1) 5wt%-9wt% of Si, 0.1wt.%-2wt.% of P, 30wt.%-40wt.% of Ca, 12wt.%-25wt.% of Fe, 30wt.%-40wt.% of O, and 0.1wt.%-8wt.% of Mg, Al, Mn, or a combination thereof, based on the weight of the catalyst; and, based on the weight of the industrial byproduct; and (2) 5wt%-12wt.% of Al, 9wt.%-18wt.% of Si, 0.01wt.%-0.5wt.% of P, 30wt.%-38wt.% of Ca, 35wt.%-48wt.% of O, and 0.1wt.%-8wt.% of Mg, S, K, Ti, Mn, Fe, or a combination thereof, based on the weight of the industrial byproduct.

According to embodiments of the invention, the industrial byproduct meets condition (1) and the weight ratio of the phosphorus-containing compound to the industrial byproduct is from about 1:10 to 1:5 (such as 1:9, 1:8, 1:7, or 1:6). In addition, the industrial byproduct meets condition (2), and the weight ratio of the phosphorus-containing compound to the industrial byproduct is from about 1:5 to 1:2 (such as 1:4, or 1:3).

According to the invention, the phosphorus-containing compound is phosphorus-containing inorganic acid.

According to embodiments of the invention, the solvent can be water, tetrahydrofuran, isopropanol, methanol, ethanol, acetonitrile, dioxane, or acetone. According to embodiments of the invention, the solution (including the phosphorus-containing compound and the solvent) can have a solid content from about 50% to 85%. According to embodiments of the invention, when immersing the industrial byproduct into the solution, the solution covers the whole industrial byproduct. After being stirred completely, the mixture is obtained.

According to embodiments of the invention, the annealing process can be performed at a temperature from about 300°C to 800°C (such as 400°C, 500°C, 600°C, or 700°C). In addition, the annealing process can be performed for a period from 30 minutes to 6 hours (such as 1 hour, 2 hours, 3hours, 4 hours, or 5 hours).

The invention provides a method for preparing the syngas. The method includes disposing the aforementioned catalyst into a reactor. Next, a carbon source is introduced into the reactor. Next, a heating process is performed to convert the carbon source into a syngas by means of the catalyst. According to embodiments of the invention, when converting the carbon source into a syngas by means of the catalyst, a carrier gas can be introduced into the reactor, wherein the carrier gas includes nitrogen gas or inert gas.

According to embodiments of the invention, before disposing the catalyst into the reactor, the catalyst can be subjected to a crushing and screening treatment. As a result, the catalyst has a particle size from about 50 $\mu$m to 1,000 $\mu$m, such as from 50 $\mu$m to 700 $\mu$m, or from 200 $\mu$m to 1000 $\mu$m.

According to embodiments of the invention, the reactor can be a fixed bed reactor, fluidized bed reactor, entrained bed reactor, or double-bed reactor. According to embodiments of the disclosure, the carbon source can be biomass, such as rice straw, sawdust, rice husk, or coal.

According to embodiments of the invention, the heating process is performed at a temperature from 600°C to 1000°C (such as 600°C, 700°C, 800°C, or 900°C). According to embodiments of the disclosure, the weight ratio of the catalyst to the carbon source is from 1:1 to 5:1, such as: 1: 2, 1: 3, or 1: 4.

According to embodiments of the invention, the syngas has a heating value from 3 MJ/Nm$^3$ to 18 MJ/Nm$^3$. For example, the syngas can include hydrogen gas ($H_2$), carbon monoxide (CO), methane ($CH_4$), or a combination thereof.

According to embodiments of the invention, the method for preparing a syngas by means of the catalyst of the invention, the gasification conversion efficiency of the method can be from about 25% to 58%, such as 46%, 47%, 48%, 49%, 50%, 51%, 52%, 53%, 54%, 55%, 56%, 57%, 58%, or 59%. According to embodiments of the invention, the heating value of the syngas can be determined by the gas chromatograph with thermal conductivity detector (GC/TCD). The gasification conversion efficiency is determined by the following equation:

$$\text{(Heating value of the syngas / Heating value of the carbon source) x 100\%}$$

Below, exemplary embodiments will be described in detail so as to be easily realized by a person having ordinary knowledge in the art. The inventive concept may be embodied in various forms without being limited to the exemplary embodiments set forth herein. Descriptions of well-known parts are omitted for clarity.

Preparation of catalyst:

Example 1 (not according to the invention):

First, 100 parts by weight of Slag powder (1) (manufactured by China Himent Corporation) (components analyzed by X-ray fluorescence spectrometer (XRF) were shown in Table 1) was immersed in a solution, wherein the solution included 1.47 parts by weight of phosphoric acid and 20 parts by weight of water. After stirring at room temperature for 4 hours, the fraction with relatively low density (suspending fraction) of the solution was divided from the fraction with relatively high density (settling fraction) of the solution by magnetic sorting. Next, the fraction with relatively high density was dried at 105°C to remove water, obtaining a solid. Next, the solid was subjected to an annealing process at 400°C for 3 hours, obtaining Catalyst (1). Catalyst (1) was analyzed by X-ray fluorescence spectrometer (XRF). The results are shown in Table 1.

Example 2:

Example 2 was performed in the same manner as Example 1 except that the amount of phosphoric acid was increased from 1.47 parts by weight to 14.7 parts by weight. After stirring at room temperature for 4 hours, the fraction with relatively low density (suspending fraction) of the solution was divided from the fraction with relatively high density (settling fraction) of the solution by magnetic sorting. Next, the fraction with relatively high density was dried at 105°C to remove water, obtaining a solid. Next, the solid was subjected to an annealing process at 400°C for 3 hours, obtaining Catalyst (2). Catalyst (2) was analyzed by X-ray fluorescence spectrometer (XRF). The results are shown in Table 1.

Example 3:

Example 3 was performed in the same manner as Example 1 except that the fraction with relatively high density (settling fraction) of the solution was replaced with the fraction with relatively low density (suspending fraction) of the solution. Next, the fraction with relatively low density was dried at 105°C to remove water, obtaining a solid. Next, the solid was subjected to an annealing process at 400°C for 3 hours, obtaining Catalyst (3). Catalyst (3) was analyzed by X-ray fluorescence spectrometer (XRF). The results are shown in Table 1.

Example 4 (not according to the invention):

Example 4 was performed in the same manner as Example 1 except that the amount of phosphoric acid was increased from 1.47 parts by weight to 25 parts by weight. After stirring at room temperature for 4 hours, the fraction with relatively low density (suspending fraction) of the solution was divided from the fraction with relatively high density (settling fraction) of the solution by magnetic sorting. Next, the fraction with relatively high density was dried at 105°C to remove water, obtaining a solid. Next, the solid was subjected to an annealing process at 400°C for 3 hours, obtaining Catalyst (4). Catalyst (4) was analyzed by X-ray fluorescence spectrometer (XRF). The results are shown in Table 1.

Example 5 (not according to the invention):

Example 5 was performed in the same manner as Example 1 except that the amount of phosphoric acid was increased from 1.47 parts by weight to 40 parts by weight. After stirring at room temperature for 4 hours, the fraction with relatively low density (suspending fraction) of the solution was divided from the fraction with relatively high density (settling fraction) of the solution by magnetic sorting. Next, the fraction with relatively high density was dried at 105°C to remove water, obtaining a solid. Next, the solid was subjected to an annealing process at 400°C for 3 hours, obtaining Catalyst (5). Catalyst (5) was analyzed by X-ray fluorescence spectrometer (XRF). The results are shown in Table 1.

Table 1

| | Elemental analysis | | | | | | | |
|---|---|---|---|---|---|---|---|---|
| | Mg (wt.%) | Al (wt.%) | Si (wt.%) | P (wt.%) | Ca (wt.%) | Mn (wt.%) | Fe (wt.%) | O (wt.%) |
| Slag powder (1) | 3.62 | 1.54 | 6.01 | 1.09 | 36.16 | 1.58 | 15.31 | 34.69 |
| Catalyst (1) | 2.41 | 1.64 | 6.25 | 1.77 | 33.02 | 1.72 | 17.79 | 35.4 |
| Catalyst (2) | 1.7 | 1.48 | 4.77 | 5.59 | 27.44 | 1.93 | 20.63 | 36.46 |
| Catalyst (3) | 1.56 | 1.28 | 4.78 | 9.24 | 34.79 | 1.02 | 8.99 | 38.34 |
| Catalyst (4) | 1.21 | 1.22 | 4.0 | 10.8 | 29.51 | 1.34 | 12.97 | 38.95 |
| Catalyst (5) | 0.79 | 0.62 | 1.92 | 14.26 | 25.04 | 1.49 | 15.95 | 39.93 |

Example 6 (not according to the invention):

First, 100 parts by weight of Slag powder (2) (manufactured by China Himent Corporation) (components analyzed by X-ray fluorescence spectrometer (XRF) were shown in Table 2) was immersed in a solution, wherein the solution included 1.47 parts by weight of phosphoric acid and 20 parts by weight of water. After stirring at room temperature for 4 hours, the fraction with relatively low density (suspending fraction) of the solution was divided from the fraction with relatively high density (settling fraction) of the solution by magnetic sorting. Next, the fraction with relatively high density was dried at 105°C to remove water, obtaining a solid. Next, the solid was subjected to an annealing process at 400°C for 3 hours, obtaining Catalyst (6). Catalyst (6) was analyzed by X-ray fluorescence spectrometer (XRF). The results are shown in Table 2.

Example 7 (not according to the invention):

Example 7 was performed in the same manner as Example 6 except that the amount of phosphoric acid was increased from 1.47 parts by weight to 14.7 parts by weight. After stirring at room temperature for 4 hours, the fraction with relatively low density (suspending fraction) of the solution was divided from the fraction with relatively high density (settling fraction) of the solution by magnetic sorting. Next, the fraction with relatively high density was dried at 105°C to remove water, obtaining a solid. Next, the solid was subjected to an annealing process at 400°C for 3 hours, obtaining Catalyst (7). Catalyst (7) was analyzed by X-ray fluorescence spectrometer (XRF). The results are shown in Table 2.

Example 8:

Example 8 was performed in the same manner as Example 6 except that the amount of phosphoric acid was increased from 1.47 parts by weight to 25 parts by weight. After stirring at room temperature for 4 hours, the fraction with relatively low density (suspending fraction) of the solution was divided from the fraction with relatively high density (settling fraction) of the solution by magnetic sorting. Next, the fraction with relatively high density was dried at 105°C to remove water, obtaining a solid. Next, the solid was subjected to an annealing process at 400°C for 3 hours, obtaining Catalyst (8). Catalyst (8) was analyzed by X-ray fluorescence spectrometer (XRF). The results are shown in Table 2.

Example 9:

Example 9 was performed in the same manner as Example 6 except that the amount of phosphoric acid was increased from 1.47 parts by weight to 40 parts by weight. After stirring at room temperature for 4 hours, the fraction with relatively low density (suspending fraction) of the solution was divided from the fraction with relatively high density (settling fraction) of the solution by magnetic sorting. Next, the fraction with relatively high density was dried at 105°C to remove water, obtaining a solid. Next, the solid was subjected to an annealing process at 400°C for 3 hours, obtaining Catalyst (9). Catalyst (9) was analyzed by X-ray fluorescence spectrometer (XRF). The results are shown in Table 2.

Table 2

| | Elemental analysis | | | | | | | | | | |
|---|---|---|---|---|---|---|---|---|---|---|---|
| | Mg (wt. %) | Al (wt. %) | Si (wt. %) | P (wt. %) | S (wt. %) | K (wt. %) | Ca (wt.%) | Ti (wt. %) | Mn (wt.%) | Fe (wt. %) | O (wt. %) |
| Slag powder (2) | 3.58 | 7.24 | 13.93 | 0.04 | 0.6 | 0.36 | 33.24 | 0.32 | 0.46 | 0.09 | 40.14 |
| Catalyst (6) | 1.9 | 4.68 | 10.22 | 1.36 | 0.41 | 0.41 | 41.61 | 0.53 | 0.49 | 0.61 | 37.78 |
| Catalyst (7) | 1.05 | 4.54 | 8.84 | 10.67 | 0.22 | 0.33 | 30.71 | 0.52 | 0.28 | 0.49 | 42.35 |
| Catalyst (8) | 0.41 | 3.98 | 6.5 | 14.63 | 0.11 | 0.22 | 29.94 | 0.34 | 0.23 | 0.4 | 43.24 |
| Catalyst (9) | 0.63 | 5.32 | 7.4 | 13.27 | 0.13 | 0.28 | 28.9 | 0.41 | 0.21 | 0.26 | 43.19 |

Comparative Example 1:

First, 100 parts by weight of Slag powder (1) (manufactured by China Himent Corporation) (components analyzed by X-ray fluorescence spectrometer (XRF) were shown in Table 1) was immersed in a solution, wherein the solution included 0.6 parts by weight of formic acid and 20 parts by weight of water. After stirring at room temperature for 4 hours, the fraction with relatively low density (suspending fraction) of the solution was divided from the fraction with relatively high density (settling fraction) of the solution by magnetic sorting. Next, the fraction with relatively high density was dried at 105°C to remove water, obtaining a solid. Next, the solid was subjected to an annealing process at 400°C for 3 hours, obtaining Catalyst (10).

Comparative Example 2:

Comparative Example 2 was performed in the same manner as Comparative Example 1 except that the amount of formic acid was increased from 0.6 parts by weight to 4.4 parts by weight. After stirring at room temperature for 4 hours, the fraction with relatively low density (suspending fraction) of the solution was divided from the fraction with relatively high density (settling fraction) of the solution by magnetic sorting. Next, the fraction with relatively high density was dried at 105°C to remove water, obtaining a solid. Next, the solid was subjected to an annealing process at 400°C for 3 hours, obtaining Catalyst (11).

Preparation of syngas:

A fixed bed gasification reactor with a radio frequency heating device was provided. The mixture of the catalyst sample and willow wood chips was disposed on the reactor tray of the fixed bed gasification reactor, wherein the weight ratio of the catalyst to the willow wood chips was 4:1. Next, the carrier gas ($N_2$, with a flow rate from 80 mL/min to 200 mL/min) was introduced into the fixed bed gasification reactor. Next, the reactor was rapidly heated to 850°C by the radio frequency heating device, and the obtained syngas was collected via the outlet port. The heating value of the syngas was determined by the gas chromatograph with thermal conductivity detector (GC/TCD), and then the gasification conversion efficiency of the catalyst sample was measured via the heating value of the obtained syngas. Herein, Slag powder (1), a quartz sand (available from Sigma-Aldrich), and Catalysts (1)-(11) individually served as the catalyst sample of the aforementioned preparation of syngas. The results are shown in Table 3.

Table 3 (catalysts 1, 4, 5, 6, 7, 10 and 11 are not according to the invention)

| | modification | gasification conversion efficiency (J.%) |
|---|---|---|
| Slag powder (1) | - | 44.3 |
| quartz sand | - | 23.8 |
| Catalyst (1) | Slag powder (1)/1.47wt.%of phosphoric acid /the fraction with relatively high density | 28.1 |
| Catalyst (2) | Slag powder (1)/14.7wt.%of phosphoric acid /the fraction with relatively high density | 56.5 |
| Catalyst (3) | Slag powder (1)/14.7wt.%of phosphoric acid /the fraction with relatively low density | 49.1 |
| Catalyst (4) | Slag powder (1)/25wt.%of phosphoric acid /the fraction with relatively high density | 26.0 |
| Catalyst (5) | Slag powder (1)/40wt.%of phosphoric acid /the fraction with relatively high density | 25.5 |
| Catalyst (6) | Slag powder (2)/1.47wt.%of phosphoric acid /the fraction with relatively high density | 26.4 |
| Catalyst (7) | Slag powder (2)/14.7wt.%of phosphoric acid /the fraction with relatively high density | 31.0 |
| Catalyst (8) | Slag powder (2)/25wt.%of phosphoric acid /the fraction with relatively high density | 48.9 |
| Catalyst (9) | Slag powder (2)/40wt%of phosphoric acid /the fraction with relatively high density | 47.9 |
| Catalyst (10) | Slag powder (1)/0.6wt%of formic acid /the fraction with relatively high density | 36.8 |

(continued)

| | modification | gasification conversion efficiency (J.%) |
|---|---|---|
| Catalyst (11) | Slag powder (1)/4.4wt.%of formic acid /the fraction with relatively high density | 29.2 |

As shown in Table 3, the gasification conversion efficiency of Catalyst (2) as disclosed in Example 2 was more than two times of the gasification conversion efficiency of the quartz sand (the material of the conventional fluidized bed reactor). Therefore, since the catalyst of the disclosure includes specific elements and amounts of the elements, the catalyst, serving as a material of fluidized bed disposed in the reactor, can inhibit the formation of the byproduct and enhance the conversion efficiency of hydrocarbon.

It will be clear that various modifications and variations can be made to the disclosed methods and materials. It is intended that the specification and examples be considered as exemplary only, with the invention being indicated by the following claims.

**Claims**

1. A catalyst, which meets one of two conditions (1) and (2) as follows:

   (1) 4wt.%-6wt.% of Si, 5wt.%-10wt.% of P, 25wt.%-35wt.% of Ca, 8wt.%-21wt.% of Fe, 36wt.%-41wt.% of O, and 0.1wt.%-5wt.% of Mg, Al, Mn, or a combination thereof, based on the weight of the catalyst; and
   (2) 3wt.%-6wt.% of Al, 6wt.%-8wt.% of Si, 12wt.%-16wt.% of P, 28wt.%-32wt.% of Ca, 38wt.%-50wt.% of O, and 0.1wt.%-3wt.% of Mg, S, K, Ti, Mn, Fe, or a combination thereof, based on the weight of the catalyst.

2. The catalyst as claimed in claim 1, wherein the catalyst meets condition (1), and the ratio (W1/W2) of the weight of P (W1) to the total weight of Si, Ca, and Fe (W2) is from 0.1 to 0.2; and/or wherein the catalyst meets condition (1), and the ratio (W1/W3) of the weight of P (W1) to the weight of O (W3) is from 0.1 to 0.27.

3. The catalyst as claimed in claim 1, wherein the catalyst meets condition (2), and the ratio (W1/W2) of the weight of P (W1) to the total weight of Si, Ca, and Fe (W2) is from 0.3 to 0.4; and/or wherein the catalyst meets condition (2), and the ratio (W1/W3) of the weight of P (W1) to the weight of O (W3) is from 0.3 to 0.4.

4. The catalyst as claimed in any of claims 1-3, wherein the catalyst has a specific surface area from 10 m$^2$/g to 100 m$^2$/g.

5. A method for fabricating a catalyst, comprising:

   immersing an industrial byproduct into a solution to obtain a mixture, wherein the solution comprises a phosphorus-containing compound dissolved in a solvent, wherein the phosphorus-containing compound is phosphorus-containing inorganic acid, and wherein the industrial byproduct meets one of the following two conditions (1) and (2):

   (1) 5wt.%-9wt.% of Si, 0.1wt.%-2wt.% of P, 30wt.%-40wt.% of Ca, 12wt.%-25wt.% of Fe, 30wt.%-40wt.% of O, and 0.1wt.%-8wt.% of Mg, Al, Mn, or a combination thereof, based on the weight of the catalyst; and, based on the weight of the industrial byproduct; and
   (2) 5wt.%-12wt.% of Al, 9wt.%-18wt.% of Si, 0.01wt.%-0.5wt.% of P, 30wt.%-38wt.% of Ca, 35wt.%-48wt.% of O, and 0.1wt.%-8wt.% of Mg, S, K, Ti, Mn, Fe, or a combination thereof, based on the weight of the industrial byproduct

   drying the mixture to remove the solvent, obtaining a solid; and
   subjecting the solid to an annealing process to obtain the catalyst as claimed in any of claims 1 to 4.

6. The method as claimed in claim 5, wherein the industrial byproduct is steel slag, wherein the industrial byproduct is free of Ni, wherein the industrial byproduct is free of Cr.

7. The method as claimed in claim 5, wherein the industrial byproduct meets condition (1), and the weight ratio of the phosphorus-containing compound to the industrial byproduct is from 1:10 to 1:5.

8. The method as claimed in claim 5, wherein the industrial byproduct meets condition (2), and the weight ratio of the phosphorus-containing compound to the industrial byproduct is 1:5 to 1:2.

9. The method as claimed in any of claims 5 to 8, wherein the phosphorus-containing inorganic acid is phosphoric acid, phosphorous acid, hypophosphorous acid, or polyphosphoric acid.

10. The method as claimed in any of claims 5 to 9, wherein the solvent is water, tetrahydrofuran, isopropanol, methanol, ethanol, acetonitrile, dioxane, or acetone.

11. The method as claimed in any of claims 5 to 10, wherein the annealing process is performed at a temperature from 300°C to 800°C and/or performed for a period from 30 minutes to 6 hours.

12. The method as claimed in any of claims 5 to 11, after immersing the industrial byproduct into the solution to obtain the mixture, further comprising:

dividing the mixture into a first fraction and a second fraction through filtration, decantation, or magnetic sorting; and
drying the first fraction or the second fraction to remove the solvent, obtaining the solid.

13. A method for preparing a syngas, comprising:

disposing the catalyst as claimed in any of claims 1 to 4 into a reactor;
introducing a carbon source into the reactor; and
performing a heating process to convert the carbon source into a syngas by means of the catalyst.

14. The method as claimed in claim 13, wherein the heating process is performed at a temperature from 600°C to 1000°C, wherein the weight ratio of the catalyst to the carbon source is from 1:1 to 5:1, and/or wherein the syngas comprises $H_2$, CO, $CH_4$, or a combination thereof.

**Patentansprüche**

1. Katalysator, der eine von zwei Bedingungen (1) und (2) erfüllt:

(1) 4 Gew.-% bis 6 Gew.-% Si, 5 Gew.-% bis 10 Gew.-% P, 25 Gew.-% bis 35 Gew.-% Ca, 8 Gew.-% bis 21 Gew.-% Fe, 36 Gew.-% bis 41 Gew.-% O und 0,1 Gew.-% bis 5 Gew.-% Mg, Al, Mn oder eine Kombination davon, bezogen auf das Gewicht des Katalysators; und
(2) 3 Gew.-% bis 6 Gew.-% Al, 6 Gew.-% bis 8 Gew.-% Si, 12 Gew.-% bis 16 Gew.-% P, 28 Gew.-% bis 32 Gew.-% Ca, 38 Gew.% bis 50 Gew.-% O und 0,1 Gew.-% bis 3 Gew.-% Mg, S, K, Ti, Mn, Fe oder eine Kombination davon, bezogen auf das Gewicht des Katalysators.

2. Katalysator nach Anspruch 1, wobei der Katalysator die Bedingung (1) erfüllt und das Verhältnis (W1/W2) des Gewichts von P (W1) zum Gesamtgewicht von Si, Ca und Fe (W2) 0,1 bis 0,2 beträgt, und/oder
wobei der Katalysator die Bedingung (1) erfüllt und das Verhältnis (W1/W3) des Gewichts von P (W1) zum Gewicht von O (W3) 0,1 bis 0,27 beträgt.

3. Katalysator nach Anspruch 1, wobei der Katalysator die Bedingung (2) erfüllt und das Verhältnis (W1/W2) des Gewichts von P (W1) zum Gesamtgewicht von Si, Ca und Fe (W2) 0,3 bis 0,4 beträgt, und/oder
wobei der Katalysator die Bedingung (2) erfüllt und das Verhältnis (W1/W3) des Gewichts von P (W1) zum Gewicht von O (W3) 0,3 bis 0,4 beträgt.

4. Katalysator nach einem der Ansprüche 1 bis 3, wobei der Katalysator eine spezifische Oberfläche von 10 $m^2$/g bis 100 $m^2$/g aufweist.

5. Verfahren zum Herstellen eines Katalysators, mit den Schritten:

Eintauchen eines industriellen Nebenprodukts in eine Lösung, um ein Gemisch zu erhalten, wobei die Lösung eine phosphorhaltige Verbindung enthält, die in einem Lösungsmittel gelöst ist, wobei die phosphorhaltige Verbindung eine phosphorhaltige anorganische Säure ist, und wobei das industrielle Nebenprodukt eine der folgenden zwei Bedingungen (1) und (2) erfüllt:

(1) 5 Gew.-% bis 9 Gew.-% Si, 0,1 Gew.-% bis 2 Gew.-% P, 30 Gew.-% bis 40 Gew.-% Ca, 12 Gew.-% bis 25 Gew.-% Fe, 30 Gew.-% bis 40 Gew.-% O, und 0,1 Gew.-% bis 8 Gew.-% Mg, Al, Mn oder eine Kombination davon, bezogen auf das Gewicht des Katalysators; und

(2) 5 Gew.-% bis 12 Gew.-% Al, 9 Gew.-% bis 18 Gew.-% Si, 0,01 Gew.-% bis 0,5 Gew.-% P, 30 Gew.-% bis 38 Gew.-% Ca, 35 Gew.-% bis 48 Gew.-% O und 0,1 Gew.-% bis 8 Gew.-% Mg, S, K, Ti, Mn, Fe oder eine Kombination davon, bezogen auf das Gewicht des industriellen Nebenprodukts;

Trocknen des Gemischs zum Entfernen des Lösungsmittels, um einen Feststoff zu erhalten; und
Unterziehen des Feststoffs einem Glühverfahren zum Erhalten des Katalysators nach einem der Ansprüche 1 bis 4.

6. Verfahren nach Anspruch 5, wobei das industrielle Nebenprodukt Stahlschlacke ist, wobei das industrielle Nebenprodukt frei von Ni ist, und wobei das industrielle Nebenprodukt frei von Cr ist.

7. Verfahren nach Anspruch 5, wobei das industrielle Nebenprodukt die Bedingung (1) erfüllt und das Gewichtsverhältnis der phosphorhaltigen Verbindung zum industriellen Nebenprodukt 1:10 bis 1:5 beträgt.

8. Verfahren nach Anspruch 5, wobei das industrielle Nebenprodukt die Bedingung (2) erfüllt und das Gewichtsverhältnis der phosphorhaltigen Verbindung zum industriellen Nebenprodukt 1:5 bis 1:2 beträgt.

9. Verfahren nach einem der Ansprüche 5 bis 8, wobei die phosphorhaltige anorganische Säure Phosphorsäure, phosphorige Säure, hypophosphorige Säure oder Polyphosphorsäure ist.

10. Verfahren nach einem der Ansprüche 5 bis 9, wobei das Lösungsmittel Wasser, Tetrahydrofuran, Isopropanol, Methanol, Ethanol, Acetonitril, Dioxan oder Aceton ist.

11. Verfahren nach einem der Ansprüche 5 bis 10, wobei der Glühvorgang bei einer Temperatur von 300°C bis 800°C und/oder über einen Zeitraum von 30 Minuten bis 6 Stunden ausgeführt wird.

12. Verfahren nach einem der Ansprüche 5 bis 11, wobei nach dem Eintauchen des industriellen Nebenprodukts in die Lösung zum Erhalten des Gemischs ferner die Schritte ausgeführt werden:

Teilen des Gemischs in eine erste Fraktion und eine zweite Fraktion durch Filtration, Dekantieren oder magnetisches Sortieren; und
Trocknen der ersten Fraktion oder der zweiten Fraktion zum Entfernen des Lösungsmittels, um den Feststoff zu erhalten.

13. Verfahren zum Herstellen eines Synthesegases, mit den Schritten:

Anordnen des Katalysators nach einem der Ansprüche 1 bis 4 in einem Reaktor;
Einbringen einer Kohlenstoffquelle in den Reaktor; und
Ausführen eines Erwärmungsprozesses zum Umwandeln der Kohlenstoffquelle mit Hilfe des Katalysators in ein Synthesegas.

14. Verfahren nach Anspruch 13, wobei der Erwärmungsprozess bei einer Temperatur von 600°C bis 1000°C ausgeführt wird, wobei das Gewichtsverhältnis des Katalysators zur Kohlenstoffquelle 1:1 bis 5:1 beträgt, und/oder wobei das Synthesegas $H_2$, CO, $CH_4$ oder eine Kombination davon enthält.

**Revendications**

1. Catalyseur qui remplit une des deux conditions (1) et (2) suivantes :

(1) 4 % en poids à 6 % en poids de Si, 5 % en poids à 10 % en poids de P, 25 % en poids à 35 % en poids de Ca, 8 % en poids à 21 % en poids de Fe, 36 % en poids à 41 % en poids d'O, et 0,1 % en poids à 5 % en poids de Mg, Al, Mn ou d'une combinaison de ceux-ci, sur la base du poids du catalyseur ; et

(2) 3 % en poids à 6 % en poids d'Al, 6 % en poids à 8 % en poids de Si, 12 % en poids à 16 % en poids de P, 28 % en poids à 32 % en poids de Ca, 38 % en poids à 50 % en poids d'O, et 0,1 % e poids à 3 % en poids de Mg, S, K, Ti, Mn, Fe ou d'une combinaison de ceux-ci, sur la base du poids du catalyseur.

2. Catalyseur selon la revendication 1, où le catalyseur remplit la condition (1) et le rapport (W1/W2) du poids de P (W1) par rapport au poids total de Si, Ca et Fe (W2) va de 0,1 à 0,2 ; et/ou où le catalyseur remplit la condition (1) et le rapport (W1/W3) du poids de P (W1) sur le poids d'O (W3) va de 0,1 à 0,27.

3. Catalyseur selon la revendication 1, où le catalyseur remplit la condition (2) et le rapport (W1/W2) du poids de P (W1) par rapport au poids total de Si, Ca et Fe (W2) va de 0,3 à 0,4 ; et/ou où le catalyseur remplit la condition (2) et le rapport (W1/W3) du poids de P (W1) sur le poids d'O (W3) va de 0,3 à 0,4.

4. Catalyseur selon l'une quelconque des revendications 1 à 3, où le catalyseur possède une surface spécifique de 10 m$^2$/g à 100 m$^2$/g.

5. Procédé de fabrication d'un catalyseur comprenant :

   l'immersion d'un sous-produit industriel dans une solution pour obtenir un mélange, où la solution comprend un composé contenant du phosphore dissout dans un solvant, où le composé contenant du phosphore est un acide inorganique contenant du phosphore, et où le sous-produit industriel remplit les deux conditions (1) et (2) suivantes :

   (1) 5 % en poids à 9 % en poids de Si, 0,1 % en poids à 2 % en poids de P, 30 % en poids à 40 % en poids de Ca, 12 % en poids à 25 % en poids de Fe, 30 % en poids à 40 % en poids d'O, et 0,1 % en poids à 8 % en poids de Mg, Al, Mn ou d'une combinaison de ceux-ci, sur la base du poids du catalyseur ; et sur la base du poids du sous-produit industriel ; et

   (2) 5 % en poids à 12 % en poids d'Al, 9 % en poids à 18 % en poids de Si, 0,01 % en poids à 0,5 % en poids de P, 30 % en poids à 38 % en poids de Ca, 35 % en poids à 48 % en poids d'O, et 0,1 % en poids à 8 % en poids de Mg, S, K, Ti, Mn, Fe ou d'une combinaison de ceux-ci, sur la base du poids du sous-produit industriel

   le séchage du mélange pour enlever le solvant, l'obtention d'un solide ; et
   la soumission du solide à un processus de recuit pour obtenir le catalyseur selon l'une quelconque des revendications 1 à 4.

6. Procédé selon la revendication 5, dans lequel le sous-produit industriel est du laitier d'acier, où le sous-produit industriel est exempt de Ni, où le sous-produit industriel est exempt de Cr.

7. Procédé selon la revendication 5, dans lequel le sous-produit industriel remplit la condition (1), et le rapport du poids du composé contenant du phosphore sur le sous-produit industriel va de 1 : 10 à 1 : 5.

8. Procédé selon la revendication 5, dans lequel le sous-produit industriel remplit la condition (2), et le rapport du poids du composé contenant du phosphore sur le sous-produit industriel va de 1 : 5 à 1 : 2.

9. Procédé selon l'une quelconque des revendications 5 à 8, dans lequel l'acide inorganique contenant du phosphore est l'acide phosphorique, l'acide phosphoreux, l'acide hypophosphoreux ou l'acide poly phosphorique.

10. Procédé selon l'une quelconque des revendications 5 à 9, dans lequel le solvant est l'eau, le tétrahydrofurane, l'isopropanol, le méthanol, l'éthanol, l'acétonitrile, le dioxane ou l'acétone.

11. Procédé selon l'une quelconque des revendications 5 à 10, dans lequel le processus de recuit est effectué à une température de 300 °C à 800 °C et/ou est effectué pendant une durée de 30 minutes à 6 heures.

12. Procédé selon l'une quelconque des revendications 5 à 11, après l'immersion du sous-produit industriel dans la solution pour obtenir le mélange, comprenant en outre :

la division du mélange en une première fraction et une seconde fraction par filtration, décantation ou par tri magnétique ; et
le séchage de la première fraction ou de la seconde fraction pour enlever le solvant, l'obtention du solide.

13. Procédé de préparation d'un gaz de synthèse comprenant :

le dépôt du catalyseur selon l'une quelconque des revendications 1 à 4 dans un réacteur ;
l'introduction d'une source de carbone dans le réacteur ; et
l'exécution d'un processus de chauffage afin de convertir la source de carbone en un gaz de synthèse au moyen du catalyseur.

14. Procédé selon la revendication 13, dans lequel le processus de chauffage est effectué à une température de 600 °C à 1000 °C, dans lequel le rapport du poids du catalyseur sur la source de carbone va de 1 : 1 à 5 : 1, et/ou dans lequel le gaz de synthèse comprend $H_2$, CO, $CH_4$ ou une combinaison de ceux-ci.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Integrated carbon dioxide/sludge gasification using waste heat from slags: Syngas production and sulfur dioxide fixation. **SUN YONGQI et al.** Bioresource Technology. Elsevier, 22 January 2015, vol. 181, 174-182

- Hydrogen production from biogas using hot slag. **PURWANTO H et al.** International Journal of Hydrogen Energy. Elsevier Science Publishers B.V, 01 March 2006, vol. 31, 491-495